# EUROPÄISCHE PATENTSCHRIFT

(11) **EP 2 117 855 B1**
(45) Veröffentlichungstag und Bekanntmachung des Hinweises auf die Patenterteilung: **31.08.2011**
(21) Anmeldenummer: 08707511.5
(22) Anmeldetag: 01.02.2008
(51) Int. Cl.: B60H 1/00, B60H 3/02

(54) **VERFAHREN ZUR STEUERUNG UND/ODER REGELUNG DER VERDAMPFERTEMPERATUR EINER KLIMAANLAGE IN EINEM KRAFTFAHRZEUG**
METHOD FOR CONTROLLING AND/OR REGULATING THE EVAPORATOR TEMPERATURE OF AN AIR CONDITIONING SYSTEM IN A MOTOR VEHICLE
PROCÉDÉ DE COMMANDE ET/OU DE RÉGULATION DE LA TEMPÉRATURE D'ÉVAPORATEUR D'UN SYSTÈME DE CLIMATISATION DANS UN VÉHICULE À MOTEUR

(30) Priorität: 15.02.2007 DE 102007007440
(43) Veröffentlichungstag der Anmeldung: 18.11.2009
(73) Patentinhaber: Bayerische Motoren Werke Aktiengesellschaft, 80809 München (DE)
(72) Erfinder: HEIL, Michael, 85661 Forstinning (DE); BRUCE, Mattias, 81545 München (DE); SALZBERGER, Robert, 81927 München (DE)
(86) Internationale Anmeldenummer: PCT/EP2008/000828
(87) Internationale Veröffentlichungsnummer: WO 2008/098692

(56) Entgegenhaltungen:
- EP-A- 0 919 410
- EP-A- 1 134 516
- DE-A1- 3 724 430
- US-A- 5 632 156
- US-A1- 2002 002 833

## Beschreibung

Die Erfindung bezieht sich auf ein Verfahren zur Steuerung und/oder Regelung der Verdampfertemperatur einer Klimaanlage in einem Kraftfahrzeug bei hohen Außentemperaturen nach dem Oberbegriff des Patentanspruchs 1 und auf eine Steuereinheit zur Durchführung des Verfahrens.

Zur Zeit wird die Verdampfertemperatur einer Klimaanlage im Kraftfahrzeug in der Regel als Funktion der Außentemperatur, des Belüftungssollwertes und der Gebläsespannung gesteuert oder geregelt. Dabei werden auch kritische Beschlagssituationen berücksichtigt, damit der Fahrer stets eine gute-Sicht hat.

Derartige Klimaanlagen können dabei in zwei verschiedenen Betriebsarten für den Kühlbetrieb betrieben werden. In der ersten Betriebsart wird die Verdampfertemperatur durch eine entsprechende Einstellung der Kompressorleistung derart gesteuert, dass die über den Verdampfer geführte Luft nicht auf den möglichen Minimalwert abgekühlt wird, sondern eine als Funktion der Außentemperatur höhere Verdampfertemperatur gewählt. Während dieser Betriebsart findet nur eine reduzierte Lufttrocknung statt, so dass es im Fahrzeug zum Beschlagen der Scheiben kommen kann. Im Gegensatz dazu wird in der zweiten Betriebsart, die Verdampfertemperatur auf eine minimal zulässige Verdampfertemperatur, die knapp über dem Gefrierpunkt liegt, reduziert. Diese sehr stark abgekühlte Luft kann in beiden Fällen zum Erreichen bzw. Halten der vorgegebenen Solltemperatur an der Belüftung und im Fahrzeuginnenraum mittels eines nachgeschalteten Heizelements wieder erwärmt werden. Die in den Fahrzeuginnenraum einströmende Luft ist aufgrund der Abkühlung durch die sehr niedrige Verdampfertemperatur und das mögliche anschließende Erwärmen sehr trocken, was vom Fahrer als unangenehm empfunden wird (Schleimhäute im Nasen und Rachenraum trocknen aus). Für die starke Abkühlung bis Nahe an die 0°C Grenze und der damit einhergehenden Entfeuchtung der Luft, und einer anschließenden möglichen Erwärmung wird zusätzliche Energie verbraucht.

Eine derartige Klimaanlage ist beispielsweise aus der DE 37 24 430 A1 bekannt. Hierbei werden in Abhängigkeit von der Außentemperatur und der Solltemperatur für den Fahrzeuginnenraum beide oben genannten Betriebsarten genutzt. Damit soll eine gute Entfeuchtungswirkung bei relativ geringem Energieverbrauch erzielt werden. Ähnliches ist auch aus der EP 919 410 A1 bekannt.

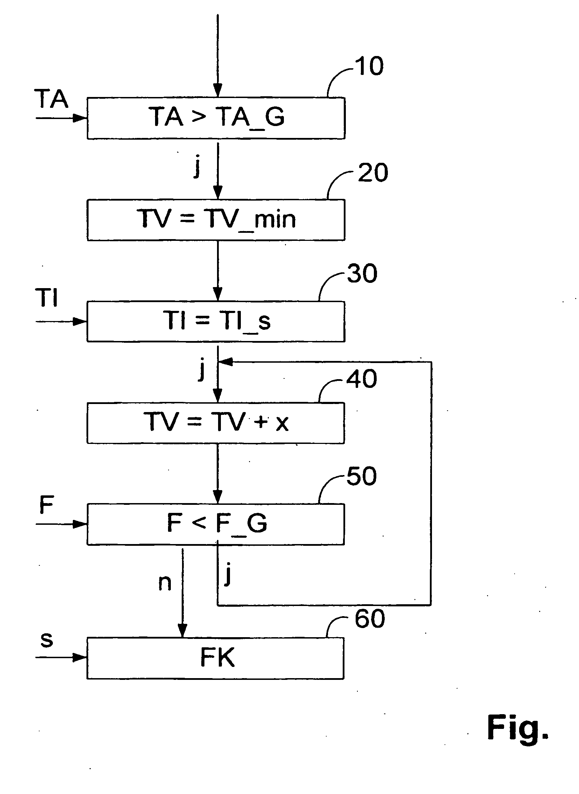

Um bei sehr hohen Außentemperaturen, bspw. über 30° C, eine anfängliche schnelle und ausreichende Kühlung des Fahrzeuginnerraums zu gewährleisten, wird in der Regel die Verdampfertemperatur auf eine vorgegebene minimale Verdampfertemperatur in der nähe des Gefrierpunkts gesteuert oder geregelt, vgl. auch Fig. 2 der DE 37 24 430 A1. Diese Technik führt bedingt durch die Verdampfertemperatur in der Nähe des Gefrierpunkts mit hoher Entfeuchtungsleistung zu physiologisch zu niedrigen relativen Feuchten im Fahrgastraum.

Um nach anfänglicher schneller Abkühlung des Fahrzeuginnenraums die vorgegebene Solltemperatur zu halten, wird die durch den Verdampfer sehr stark abgekühlte Luft anschließend teilweise wieder über den Wärmetauscher aufgeheizt. Dies führt zu einer sehr trockenen Innenraumluft und zusätzlich zu einem erhöhlten Kraftstoffverbrauch.

Aufgabe der Erfindung ist es, ein im Hinblick auf den Kraftstoffverbrauch verbessertes Verfahren zur Steuerung und/oder Regelung der Verdampfertemperatur einer Klimaanlage in einem Kraftfahrzeug bei hohen Außentemperaturen anzugeben.

Diese Aufgabe wird durch ein Verfahren nach Patentanspruch 1 und eine Steuereinheit zur Durchführung eines entsprechenden Verfahrens gelöst. Vorteilhafte Weiterbildungen ergeben sich aus den abhängigen Ansprüchen.

Grundgedanke der Erfindung ist, die Verdampfertemperatur zusätzlich bedarfsgerecht über die Stellgröße für die Innenraumtemperaturregelung zu regeln. Das erfindungsgemäße Verfahren zur Steuerung und/oder Regelung der Verdampfertemperatur einer Klimaanlage in einem Kraftfahrzeug im Kühlbetrieb, steuert oder regelt bei sehr hohen Außentemperaturen, also bei Außentemperaturen, die einen vorgegebenen Grenzwert überschreiten, anfänglich die Verdampfertemperatur gemäß dem bekannten Stand der Technik auf eine vorgegebene minimale Verdampfertemperatur bis eine vorgegebene Solltemperatur im Fahrzeuginnenraum bzw. Beharrung erreicht ist. Der Kern der Erfindung liegt darin, dass bei bzw. nach Erreichen der Solltemperatur für den Fahrzeuginnenraum die Verdampfertemperatur solange erhöht wird, bis eine vorgegebene Innenraumfeuchte im Fahrzeug erreicht wird Während dieser Phase des erfindungsgemäßen Verfahrens kann unabhängig ein Wärmetauscher zum Aufheizen der Luft verwendet werden. Durch die schrittweise Erhöhung der Verdampfertemperatur wird zum einen die Feuchte im Fahrzeuginnenraum wieder erhöht und gleichzeitig wird der Kraftstoffverbrauch reduziert. Somit können Energieeinsparungen gegenüber herkömmlichen Verfahren verwirklicht werden. Auch der Kohlendioxidausstoß wird deutlich gesenkt.

Vorteilhafterweise wird als Innenraumfeuchte ein Innenraumfeuchte-Bereich vorgegeben, der von den Fahrzeuginsassen als angenehm empfunden wird. Die Verdampfertemperatur wird somit solange erhöht, bis eine Innenraumfeuchte im Fahrzeug vorherrscht, die innerhalb dieses vorgegebenen Innenraumfeuchte-Bereichs liegt. Sobald die Obergrenze dieses Innenraumfeuchtebereichs erreicht wird, kann die Verdampfertemperatur entweder auf diesem Niveau gehalten werden, oder wird nur um das Maß verändert, das zum Halten der Solltemperatur bzw. Innenraumfeuchte des Fahrzeuginnenraumes ohne Aktivierung des Wärmetauschers notwendig ist.

Vorteilhafterweise wird die im Fahrzeug herrschende Innenraumfeuchte in Abhängigkeit vom Signal eines Beschlagsensors und/oder eines Feuchtesensors ermittelt, da Beschlagsensoren und/oder Feuchtesensoren in neueren Fahrzeugen ohnehin vorhanden sind. Prinzipiell werden Beschlagsensoren nur zum Detektieren von Beschlag am den Fahrzeugscheiben verwendet. So wird Beschlag detektiert, wenn der Sensor bspw. eine Feuchte einen bestimmten Sollwert überschreitet (z.B. 60%). Da sich das Beschlagsensorsignal gleitend in Abhängigkeit der Feuchte verändert , kann dieses Signal auch bei niedrigen Feuchten als Maß für eine Innenraumfeuchte herangezogen und ausgewertet werden. So kann als angenehmer Innenraumfeuchte-Bereich derjenige Bereich angegeben werden, bei dem das Signal des Beschlagssensors eine Feuchte zwischen 20% bis 30% ausgibt. Dieser Innenraumfeuchtebereich wird von den meisten Menschen als angenehm empfunden.

Wird aufgrund der schrittweisen Anhebung der Verdampfertemperatur die vorgegebene Innenraumfeuchte bzw. die obere Grenze des vorgegebenen Innenraumfeuchte-Bereichs erreicht, wird vorteilhafterweise in Abhängigkeit vom Signal des Beschlagsensors die Öffnung der Frischluftklappen des Kraftfahrzeugs gedrosselt (Besonders wirksam bei höheren Außenfeuchten). Durch diese gezielte Drosselung der Öffnung der Frischluftklappen kann zusätzlich bzw. weiterhin bei maximal hoher Verdampfertemperatur Kraftstoff gespart werden, da die Verdampfertemperatur nicht wieder abgesenkt werden muss. Erst wenn diese Maßnahmen nicht zu dem gewünschten Erfolg führen, muss zum Erreichen bzw. Halten der vorgegebenen Innenraumfeuchte die Verdampfertemperatur wieder abgesenkt werden.

In einer vorteilhaften Ausgestaltung der Erfindung kann zusätzlich das Signal eines Solarsensors ausgewertet werden, um eine optimale Steuerung und/oder Regelung der Verdampfertemperatur bei hohen Außentemperaturen zu ermöglichen. Eine hohe direkte Sonnenlast von vorne bzw. von der Seite muss mit einer Absenkung der Verdampfertemperatur und einer Anhebung der direkten Luftmenge aus den Belüftungsdüsen beantwortet werden. Dieses zusätzliche Solarsensorsignal kann zur Verdampfertemperaturregelung benutzt werden. Je nach Strahlungslast (bewölkter Himmel, bzw. Dunkelheit - Nacht) wird die Verdampfertemperatur abgesenkt oder angehoben.

Das erfindungsgemäße Verfahren kann in einer Steuereinheit zur Steuerung und/oder Regelung der Verdampfertemperatur bzw. der gesamten Klimaanlage implementiert sein.

Das erfindungsgemäße Verfahren wird nun anhand eines Ausführungsbeispiels näher erläutert: Dabei zeigt die einzige Figur ein vereinfachtes Ablaufdiagramm des Verfahrens zur Steuerung der Verdampfertemperatur einer Klimaanlage im Kühlbetrieb bei hohen Außentemperaturen.

Zu Beginn des Verfahrens zur Steuerung und/oder Regelung der Verdampfertemperatur einer Klimaanlage in einem Kraftfahrzeug bei hohen Außentemperaturen wird in einem Schritt 10 ermittelt, ob die Außentemperatur TA einen hohen Außentemperatur-Grenzwert TA_G von bspw. 30° C überschreitet. Ist dies der Fall, wird zum Schritt 20 übergegangen. Hier wird die Verdampfertemperatur TV auf einen minimalen Verdampfertemperatur TV_min, der kurz vor dem Gefrierpunkt liegt, eingeregelt. Im nächsten Schritt 30 wird überprüft, ob die ermittelte Temperatur TI im Fahrzeuginnenraum die vorgegebene Solltemperatur TI_s für den Fahrzeuginnenraum erreicht hat. Sobald die vorgegebene Solltemperatur TI_s für den Fahrzeuginnenraum erreicht ist, wird im nächsten Schritt 40 die Verdampfertemperatur TV nicht mehr auf die minimale Verdampfertemperatur TV_min geregelt. Vielmehr wird nun die Verdampfertemperatur TV schrittweise um einen Betrag x erhöht. Nach jeder Erhöhung der Verdampfertemperatur TV um den Betrag x wird im Schritt 50 die aus dem Signal eines Beschlagssensors ermittelte Innenraumfeuchte F mit einem vorgegebenen Innenraumfeuchte-Grenzwert F_G, der auch ein Innenraumfeuchte-Bereich sein kann, verglichen. Solange die ermittelte Innenraumfeuchte F noch geringer ist, als der vorgegebene Innenraumfeuchte-Grenzwert F_G, wird zum Schritt 40 zurückgekehrt und die Verdampfertemperatur TV weiterhin erhöht.

Erreicht oder überschreitet die ermittelte Innenraumfeuchte F den vorgegebenen Innenraumfeuchte-Grenzwert F_G bzw. die obere Grenze des vorgegebenen Innenraumfeuchte-Bereichs, wird zum Schritt 60 übergegangen und in Abhängigkeit von der ermittelten Innenraumfeuchte bzw. vom Signal s des Beschlagsensors die Öffnung der Frischtuftklappen FK des Kraftfahrzeugs gedrosselt. Durch diese gezielte Drosselung der Frischluftklappen FK kann zusätzlich bzw. weiterhin bei maximal hoher Verdampfertemperatur TV, die zu diesem Zeitpunkt eingestellt ist, Kraftstoff gespart werden, da die Verdampfertemperatur TV nicht wieder abgesenkt werden muss.

## Patentansprüche

1. Verfahren zur Steuerung und/oder Regelung der Verdampfertemperatur (TV) einer Klimaanlage in einem Kraftfahrzeug im Kühlbetrieb, wobei bei einer Außentemperatur (TA), die einen vorgegebenen Grenzwert (TA_G) überschreitet, die Verdampfertemperatur (TV) bis zum Erreichen einer vorgegebenen Solltemperatur (TI_s) im Fahrzeuginnenraum auf eine vorgegebene minimale Verdampfertemperatur (TV_min) gesteuert und/oder geregelt wird, **dadurch gekennzeichnet, dass** nach Erreichen der vorgegebenen Solltemperatur (TI_soll) im Fahrzeuginnenraum die Verdampfertemperatur, (TV) solange erhöht (x) wird, bis eine vorgegebene Innenraumfeuchte (F) im Fahrzeug erreicht wird.

2. Verfahren nach Anspruch 1, **dadurch gekennzeichnet, dass** die Innenraumfeuchte (F) ein Innenraumfeuchte-Bereich ist, der von den Fahrzeuginsassen als angenehm empfunden wird.

3. Verfahren nach Anspruch 1 oder 2, **dadurch gekennzeichnet, dass** die Innenraumfeuchte (F) in Abhängigkeit vom Signal (s) eines Beschlagsensors und/oder eines Feuchtesensors ermittelt wird.

4. Verfahren nach einem der vorangegangenen Ansprüche, **dadurch gekennzeichnet, dass** bei Erreichen der vorgegebenen Innenraumfeuchte (F= F_G) oder der oberen Grenze des vorgegebenen Innenraumfeuchte-Bereichs die Öffnung der Frischluftklappen (FK) des Kraftfahrzeugs gedrosselt wird.

5. Verfahren nach einem der vorangegangenen Ansprüche, **dadurch gekennzeichnet, dass** zusätzlich das Signal eines Solarsensors zur Steuerung und/oder Regelung der Verdampfertemperatur ausgewertet wird.

6. Steuereinheit zur Durchführung eines Verfahrens nach einem der Ansprüche 1 bis 5.

## Claims

1. A method for controlling and/or regulating the evaporator temperature (TV) of an air conditioning system in a motor vehicle in cooling mode, wherein, at an external temperature (TA) which exceeds a predetermined limit value (TA_G), the evaporator temperature (TV) is controlled and/or regulated to a predetermined minimum evaporator temperature (TV_min) until a predetermined desired temperature (TI_s) is reached in the vehicle interior, **characterised in that** once the predetermined desired temperature (TI_desired) is reached in the vehicle interior, the evaporator temperature (TV) is increased (x) until a predetermined interior humidity (F) is reached in the vehicle.

2. A method according to claim 1, **characterised in that** the interior humidity (F) is an interior humidity range which is experienced as pleasant by the vehicle occupants.

3. A method according to claim 1 or 2, **characterised in that** the interior humidity (F) is determined as a function of the signal (s) of a condensation sensor and/or a humidity sensor.

4. A method according to any one of the preceding claims, **characterised in that** on reaching the predetermined interior humidity (F=F_G) or the upper limit of the predetermined interior humidity range, the opening of the fresh air flaps (FK) of the motor vehicle is throttled.

5. A method according to any one of the preceding claims, **characterised in that**, additionally, the signal of a solar sensor is evaluated to control and/or regulate the evaporator temperature.

6. A control unit for carrying out a method according to any one of claims 1 to 5.

## Revendications

1. Procédé de commande et/ou de régulation de la température d'évaporation (TV) d'une installation de climatisation équipant un véhicule automobile fonctionnant en mode de refroidissement,
selon lequel
pour une température extérieure (TA) qui dépasse une valeur limite prédéfinie (TA_G), la température d'évaporation (TV) est commandée et/ou régulée sur une température minimale d'évaporation (TV_min), prédéfinie jusqu'à atteindre une température de consigne prédéfinie (TI_s) dans l'habitacle du véhicule,
procédé **caractérisé en ce qu'**
après avoir atteint la température de consigne (TI_soll) prédéfinie dans l'habitacle du véhicule, on augmente (x) la température d'évaporation (TV) dans l'habitacle du véhicule jusqu'à ce qu'une humidité prévisible du volume intérieur (F) du véhicule, soit atteinte.

2. Procédé selon la revendication 1,
**caractérisé en ce que**
l'humidité ambiante intérieure (F) est une plage d'humidité d'habitacle perçue comme agréable par les occupants du véhicule.

3. Procédé selon la revendication 1 ou 2,
**caractérisé en ce que**
l'humidité ambiante intérieure (F) se détermine en fonction du signal (s) d'un capteur de buée et/ou d'un capteur d'humidité.

4. Procédé selon l'une des revendications précédentes,
**caractérisé en ce que**
lorsqu'on atteint l'humidité ambiante intérieure prédéfinie (F = F_G) ou la limite supérieure de la plage d'humidité ambiante intérieure on étrangle l'ouverture des volets d'air frais (FK) du véhicule.

5. Procédé selon l'une des revendications précédentes,
**caractérisé en ce qu'**
en plus on exploite le signal d'un capteur solaire pour commander et/ou réguler la température d'évaporation.

6. Unité de commande pour la mise en oeuvre du procédé selon l'une des revendications 1 à 5.
